# EUROPEAN PATENT APPLICATION

(11) **EP 4 725 797 A1**
(43) Date of publication of application: **15.04.2026**
(21) Application number: 25207694.8
(22) Date of filing: 09.10.2025
(51) Int. Cl.: B62B 7/14, B62B 9/28

(54) **CHILD CARRIER**

(30) Priority: 09.10.2024 CN 202411404831; 25.10.2024 CN 202411506120
(71) Applicant: Bambino Prezioso Switzerland AG, 6312 Steinhausen (CH)
(72) Inventor: ZENG, Haibo, Dongguan, Guangdong, 523000 (CN)
(74) Representative: Pfenning, Meinig & Partner mbB

(57) **Abstract**

A child carrier (1) includes: a frame (100) including at least two engaging members (142, 143); and a support plate (150) including at least two engaging portions (152, 153), the engaging members (142, 143) being respectively engaged with the engaging portions (152, 153), to allow the support plate (150) to be detachably engaged with the frame (100), wherein the at least two engaging members (142, 143) include a locking member (142) and a positioning member (143), and the at least two engaging portions (152, 153) include a locking member accommodating portion (153) and a positioning member accommodating portion (152); the positioning member (143) is pivotably engaged with the positioning member accommodating portion (152) to allow the support plate (150) to be pivotable between a use position and a storage position relative to the frame (100).

## Description

### TECHNICAL FIELD

The present disclosure relates to a child carrier.

### BACKGROUND

A double-seat baby stroller is configured to carry two children simultaneously and is particularly suitable for families with twins or two children of similar ages. Strollers with detachable seats generally have complex structures and high costs. Consequently, there is a need to provide a double-seat stroller that has a simple structure and is convenient to use.

### SUMMARY

The present disclosure provides a child carrier, including: a frame including at least two engaging members; and a support plate including at least two engaging portions, the engaging members being respectively engagable with the engaging portions to allow the support plate to be detachably engaged with the frame. The at least two engaging members include a locking member and a positioning member, and the at least two engaging portions include a locking member accommodating portion and a positioning member accommodating portion. The positioning member is pivotably engaged with the positioning member accommodating portion to allow the support plate to be pivotable between a use position and a storage position relative to the frame. When the support plate is in the use position, the locking member is engaged with the locking member accommodating portion to prevent the positioning member from being disengaged from the positioning member accommodating portion. When the support plate is in the storage position, the locking member is disengaged from the locking member accommodating portion to allow the positioning member to be disengaged from the positioning member accommodating portion.

According to an embodiment, the positioning member accommodating portion has a positioning groove for engagement with the positioning member; the locking member accommodating portion has a guide groove for engagement with the locking member; an opening direction of the positioning groove is different from an opening direction of the guide groove; the locking member accommodating portion further has a locking assembly for locking the locking member.

According to an embodiment, the positioning member accommodating portion is disposed perpendicular to a carrying portion of the support plate, the opening direction of the positioning groove is parallel to the carrying portion, the locking member accommodating portion is disposed perpendicular to the carrying portion of the support plate, and the opening direction of the guide groove is away from the carrying portion.

According to an embodiment, the locking member has an engaging projection; the locking member accommodating portion includes a first side wall and a second side wall spaced apart from each other, the guide groove is disposed at the first side wall, and the second side wall is provided with an engaging hole, wherein the locking assembly is the engaging hole; when the locking member is inserted into the guide groove, the second side wall is operatively bendable towards the first side wall, to allow the engaging hole to lock the engaging projection.

According to an embodiment, the positioning member accommodating portion has a double-layer structure, and the positioning groove is provided in a layer close to the frame; the positioning member includes a connecting segment fixed to the frame and a head portion adjacent to the connecting segment, a diameter of the head portion is greater than a diameter of the connecting segment, and the head portion is capable of passing through the positioning groove to be positioned between two layers of the double-layer structure.

According to an embodiment, the locking member includes a connecting segment fixed to the frame and a locking portion adjacent to the connecting segment, and the engaging projection is protrudingly disposed at a top end side of the locking portion away from the frame; when the locking portion passes through the engaging hole, the engaging projection blocks the second side wall from being disengaged from the locking portion.

According to an embodiment, the engaging projection protrudes from the locking portion towards the ground along a vertical direction of the frame, and the locking portion includes an engaging groove adjacent to the engaging projection to receive the second side wall.

According to an embodiment, the positioning member accommodating portion, the locking member accommodating portion and the carrying portion form an integral member; and an end surface of a top end side of the locking portion is an inclined surface.

According to an embodiment, the frame further includes a support rod, wherein the support rod is located between the at least two engaging members and supports the support plate to provide a bearing force for the support plate when the support plate is engaged with the frame; and/or the child carrier further includes a pair of fixing seats, wherein the fixing seats are each protrudingly disposed at the frame, the locking member and the positioning member are disposed on each of the fixing seats and spaced apart from each other, an end of the support plate has a receiving portion recessed inwardly, and the receiving portion abuts against an upper surface of the fixing seat to provide a bearing force for the support plate when the support plate is engaged with the frame.

The present disclosure further provides a child carrier, including: a frame including at least two engaging members; and a support plate including at least two engaging portions, the engaging members being respectively engageable with the engaging portions, to allow the support plate to be detachably engaged with the frame. The at least two engaging members include a locking member, and the at least two engaging portions include a locking member accommodating portion. The locking member has an engaging projection, the locking member accommodating portion includes a first side wall and a second side wall spaced apart from each other, the first side wall is provided with a guide groove, and the second side wall is provided with an engaging hole. When the locking member is inserted into the guide groove, the second side wall is operatively bendable to allow the engaging hole to be locked onto the engaging projection.

The present disclosure further provides a child carrier, including: a frame; a support plate releasably connected to the frame and movable between a use position and a storage position; and an engaging member provided between the frame and the support plate, and including a locking member and a positioning member. The support plate has a locking assembly and a positioning member accommodating portion, the locking assembly is engageable with the locking member in an unlockable manner, and the positioning member accommodating portion cooperates with the positioning member; the locking member is pivotable relative to the frame to allow the support plate to be pivotable between the use position and the storage position relative to the frame. When the support plate is in the use position, the positioning member is engaged with the positioning member accommodating portion to prevent the support plate from being disengaged from the frame. When the support plate leaves the use position, the positioning member is disengaged from the positioning member accommodating portion to allow the support plate to be disengaged from the frame.

According to an embodiment, the locking member is configured as a rotating seat, the rotating seat is pivotably connected to the frame by a coupling portion, and the support plate pivots relative to the frame through the rotating seat; the frame has a positioning portion, and the positioning portion defines a rotation angle of the rotating seat to define a pivot position of the support plate relative to the frame.

According to an embodiment, the positioning portion includes a plurality of positioning projections, a plurality of positioning recesses are formed between the plurality of positioning projections, the rotating seat includes at least one protruding portion, and the protruding portion is embedded in one of the plurality of positioning recesses to limit the rotating seat to one of a plurality of rotation positions.

According to an embodiment, the coupling portion includes a head portion and a connecting rod; a first end of the connecting rod is connected to the fixing seat, while a second end of the connecting rod is connected to the head portion; the coupling portion further includes an elastic member disposed between the rotating seat and the head portion, and the elastic member exerts, on the rotating seat, a pressing force towards the positioning portion.

According to an embodiment, the support plate further includes a locking member accommodating portion for receiving the rotating seat, and the locking member accommodating portion has two engaging blocks parallel to each other; the rotating seat has a first wall portion and a second wall portion parallel to each other along a rotation axis of the rotating seat, two partition plates are provided between the first wall portion and the second wall portion, the first wall portion and the second wall portion along with the partition plates form two recessed portions, and the two recessed portions are distributed along a circumferential direction of the rotating seat and opposite to each other along a radial direction of the rotating seat; in a case where the support plate is engaged with the frame, the two engaging blocks are respectively inserted into the two recessed portions and engaged with the partition plates, so that the support plate may drive the rotating seat to rotate.

According to an embodiment, along the circumferential direction of the rotating seat, an engaging groove and a receiving groove opposite to each other are provided between the two partition plates; the locking assembly is engaged with the engaging groove; the receiving groove is configured to receive a convex portion of the locking member accommodating portion; and the convex portion is configured to position an insertion location of the rotating seat with the support plate and strengthen engagement between the rotating seat and the support plate.

According to an embodiment, the engaging groove is opened towards the support plate, and a flange is provided at a side of the engaging groove facing the locking assembly to prevent the locking assembly from being disengaged from the rotating seat.

According to an embodiment, the positioning member accommodating portion has an anti-disengagement portion, and the anti-disengagement portion prevents the positioning member from disengaging from the positioning member accommodating portion when the support plate is in the use position.

### BRIEF DESCRIPTION OF THE DRAWINGS

FIG. 1 is a front perspective view of a child carrier according to an embodiment of the present disclosure;
FIG. 2 is a rear perspective view of a child carrier according to an embodiment of the present disclosure;
FIG. 3 is a rear perspective view of a child carrier according to an embodiment of the present disclosure;
FIG. 4 illustrates part A of FIG. 3;
FIG. 5 is a perspective view of a locking member according to an embodiment of the present disclosure;
FIG. 6 is a perspective view of a positioning member according to an embodiment of the present disclosure;
FIG. 7 is a perspective view of a support plate according to an embodiment of the present disclosure;
FIG. 8 is a perspective view of the support plate according to an embodiment of the present disclosure from another angle of view;
FIG. 9 is a bottom perspective view of a child carrier according to an embodiment of the present disclosure;
FIG. 10 illustrates part B of FIG. 9;
FIG. 11 is a bottom perspective view of a child carrier according to an embodiment of the present disclosure;
FIG. 12 illustrates part C of FIG. 11;
FIG. 13 is a rear perspective view of a child carrier according to an embodiment of the present disclosure;
FIG. 14 is a rear perspective view of a child carrier according to another embodiment of the present disclosure;
FIG. 15 is a rear perspective view of a child carrier according to another embodiment of the present disclosure;
FIG. 16A is a front perspective view of a child carrier according to another embodiment of the present disclosure;
FIG. 16B is a detailed view of part D in FIG. 16A;
FIG. 17A is an enlarged view of part D of FIG. 16A, with a rotating seat removed;
FIGS. 17B and 17C are two side views of the rotating seat;
FIG. 18 is a sectional view taken along sectional line I-I of FIG. 17A;
FIG. 19 is a perspective view of a support plate according to another embodiment of the present disclosure;
FIG. 20A is a front perspective view of a child carrier according to another embodiment of the present disclosure;
FIG. 20B is a detailed view of part E in FIG. 20A;
FIG. 21 is a sectional view of part E along sectional line II- II of FIG. 20B;
FIG. 22 is a sectional view of part E along sectional line II- II of FIG. 20B.

### Reference numerals:

1 child carrier
   100 frame
      110 front frame leg;
      120 rear frame leg
      130 handlebar
      140 fixing seat
         141 connector
         142 engaging member, locking member
            142-1 connecting segment; 142-2 locking portion; 142-3 recessed portion;
            142-4 engaging projection; 142-5 engaging groove; 142-6 positioning projection
         143 engaging member, positioning member
            143-1 connecting segment; 143-2 head portion; 143-3 recessed portion
         144 support rod
         145 positioning portion
            150 support plate
               151 carrying portion
               152 engaging portion, positioning member accommodating portion
               153 engaging portion, locking member accommodating portion
               154 positioning groove
               155 engaging hole
               156-1 first side wall; 156-2 second side wall
               157 guide groove
               158 passage
               159 receiving portion
            160 footrest
            170 first connecting rod
            180 second connecting rod
   200 wheel
1a child carrier
   100a frame
      110a front frame leg
      120a rear frame leg
      130a handlebar
      140a fixing seat
         141a connector
         142a engaging member, locking member, rotating seat
            142-1a first wall portion; 142-2a second wall portion; 142-3a recessed portion; 142-4a accommodating portion; 142-5a engaging groove; 142-6a partition plate; 142-7a receiving groove; 142-8a protruding portion;
            142-9a flange; 142-10a rounded portion
         143a engaging member, positioning member
         144a coupling portion
            144-1a head portion; 144-2a connecting rod; 144-3a elastic member
         145a positioning portion
            145-1a positioning projection; 145-2a positioning recess
         150a support plate
            151a carrying portion
            152a engaging portion, positioning member accommodating portion
            153a engaging portion, locking member accommodating portion
            154a locking assembly
               154-1a snap block; 154-2a sliding groove; 154-3a limiting block; 154-4a elastic member; 154-5a locking portion; 154-6a limiting portion;
               154-7a handheld portion
            155a convex portion
            156a engaging block
            157a anti-disengagement portion; 157-1a protrusion
            158a side wall
            159a rear wall; 159-1a notch
         160a footrest
         170a first connecting rod
         180a second connecting rod
      200a wheel
   D1 clockwise direction
   D2 counterclockwise direction
   A part; B part; C part; D part; E part
   R rotation axis
   X forward direction
   Y transverse direction
   Z vertical direction
   I-I sectional line; II- II sectional line

### DETAILED DESCRIPTION

Although the present disclosure is illustrated and described with reference to specific embodiments, the present disclosure is not limited to the details shown. Rather, various modifications may be made to these details within the scope of equivalents of the claims and without departing from the present disclosure.

The terms "front", "rear", "upper", "lower" and other directions involved in the present disclosure are only for ease of understanding, and the present disclosure is not limited to these directions and instead may be adjusted according to actual situations. Although the present disclosure is described with reference to typical embodiments, the terms used herein are illustrative and exemplary, rather than restrictive.

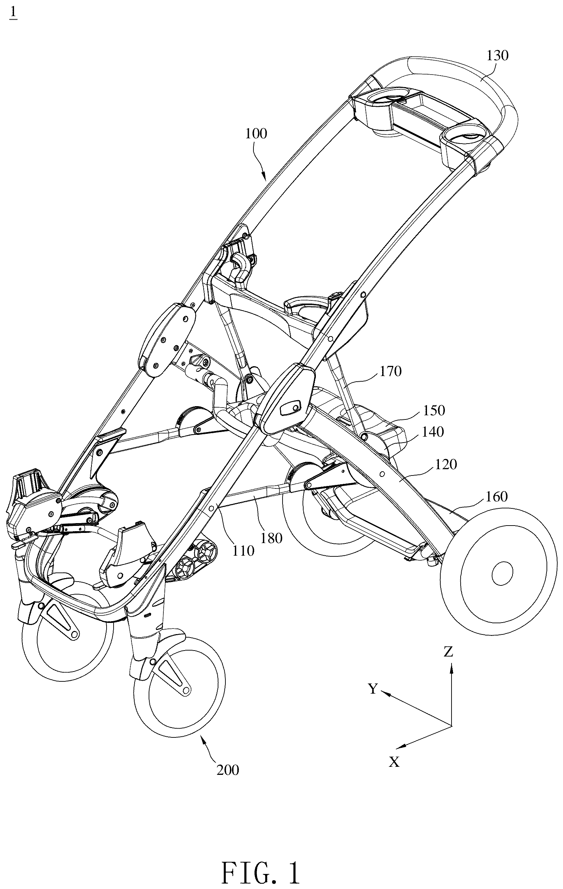

FIG. 1 is a front perspective view of a child carrier 1 according to an embodiment of the present disclosure, in which a forward direction X is a direction that a caregiver faces when pushing the child carrier 1; a transverse direction Y is a direction perpendicular to the forward direction X and parallel to a horizontal plane; and a vertical direction Z is a direction perpendicular to the horizontal plane. A direction consistent with the forward direction X is defined as the front and the opposite direction is defined as the rear. In the present disclosure, the child carrier 1 is a baby stroller. However, it should be understood that the child carrier 1 of the present disclosure may also be a pet carrier, a shopping cart, a trolley, etc.

The child carrier 1 includes a frame 100 and wheels 200 provided below the frame 100. The frame 100 includes: a front frame leg 110 in the front of the child carrier 1 along the forward direction X; a rear frame leg 120 in the rear of the child carrier 1; and a handlebar 130 convenient for the caregiver to push. The front frame leg 110, the rear frame leg 120 and the handlebar 130 are connected with one another. According to this embodiment, a first connecting rod 170 is provided between the handlebar 130 and the rear frame leg 120, a second connecting rod 180 is provided between the front frame leg 110 and the rear frame leg 120, and the first connecting rod 170 and the second connecting rod 180 are configured to keep the frame 100 in an unfolded state. Unless otherwise specified below, the frame 100 remains in the unfolded state. According to this embodiment, the first connecting rod 170 extends substantially in the vertical direction Z, and the second connecting rod 180 extends substantially in the forward direction X. According to this embodiment, the rear frame leg 120 has a pair of fixing seats 140, and each of the fixing seats 140 protrudes inwards from the rear frame leg 120. The fixing seat 140 may be formed by the rear frame leg 120 or mounted to the rear frame leg 120, and is configured to fix the first connecting rod 170 and the second connecting rod 180.

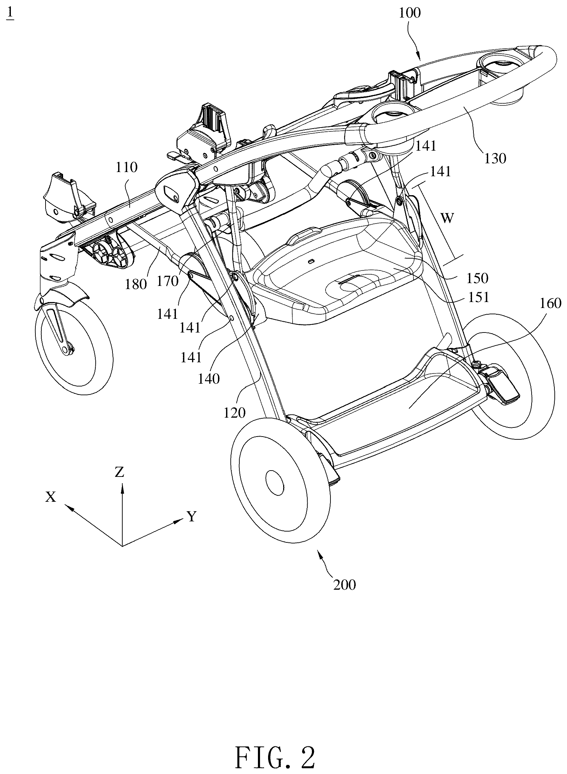

According to this embodiment, the child carrier 1 is provided with a support plate 150 at the fixing seats 140, and the support plate 150 is configured to support an article or a child. The support plate 150 is provided between the fixing seats 140 on both sides of the frame 100 and extends in the transverse direction Y. According to the present disclosure, the support plate 150 is detachably engaged with the frame 100. A specific form of the support plate 150 and its engagement with the frame 100 will be described below with reference to FIG. 2 to FIG. 13.

According to this embodiment, the support plate 150 is configured as a seat plate on which the child may sit. In front of the support plate 150 along the forward direction X, a seating portion (not shown) may be provided on the frame 100 to seat one child. The support plate 150 is positioned behind the seating portion to seat another child simultaneously. Thus, the child carrier 1 may carry two children simultaneously. Optionally, a footrest 160 on which the child may step is further provided between the rear frame leg 120 on both sides of the frame 100.

FIG. 2 is a rear perspective view of the child carrier 1 according to an embodiment of the present disclosure.

According to this embodiment, the fixing seat 140 is provided as an independent component, and is fixed to the rear frame leg 120 of the carrier frame 100 by a connector 141 such as a rivet. The first connecting rod 170 and the second connecting rod 180 are pivotably connected to the fixing seat 140 by the connector 141 such as a rivet.

According to this embodiment, the support plate 150 is substantially flat; two ends of the support plate 150 in the transverse direction Y are engaged with the fixing seat 140; and a top surface of the support plate 150 is a carrying portion 151 for carrying the article or the child. When the child sits on the carrying portion 151, the child faces the rear of the frame 100, that is, faces a direction opposite to the forward direction X.

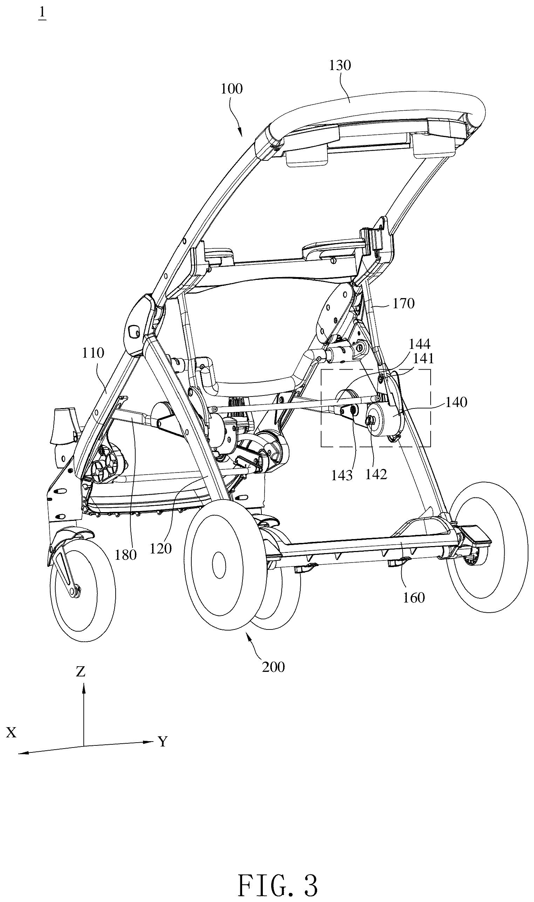

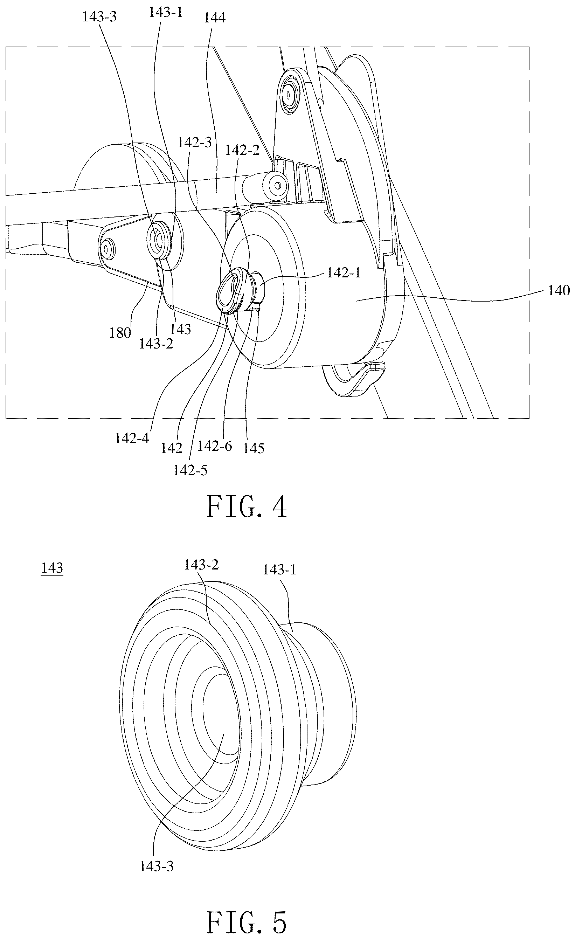

FIG. 3 is a rear perspective view of the child carrier 1 according to an embodiment of the present disclosure, with the support plate 150 removed. FIG. 4 is a partially enlarged view of part A of FIG. 3. Referring to FIGS. 3 and 4, the fixing seat 140 is provided on each side of the rear frame leg 120, and the fixing seat 140 protrudes inwards from the rear frame leg 120 to bear the support plate 150. Each fixing seat 140 includes at least two engaging members 142, 143 for engaging the support plate 150 (see FIG. 2). At least two engaging members 142 and 143 include a locking member 142 and a positioning member 143, and the locking member 142 and the positioning member 143 are spaced apart from each other in the forward direction X and protrude inwards beyond the fixing seat 140 in the transverse direction Y. According to an embodiment, the locking member 142 and the positioning member 143 are on different planes along the vertical direction Z. According to another embodiment, the locking member 142 and the positioning member 143 may also be on a common plane along the vertical direction Z.

Optionally, a support rod 144 extending in the transverse direction Y may also be provided on the fixing seat 140, to further bear the support plate 150 from below. The support rod 144 is located below the support plate 150 and is shielded by the carrying portion 151 in FIG. 2. The support rod 144 is fastened to the fixing seat 140 or other components (such as the rear frame leg 120) of the frame 100, for example, by riveting, plugging, snapping or welding. According to this embodiment, the support rod 144 is configured in a U-shape to adapt to a corresponding accommodating portion of the support plate 150. According to this embodiment, a bottom of the U-shaped support rod 144 is located between the locking member 142 and the positioning member 143.

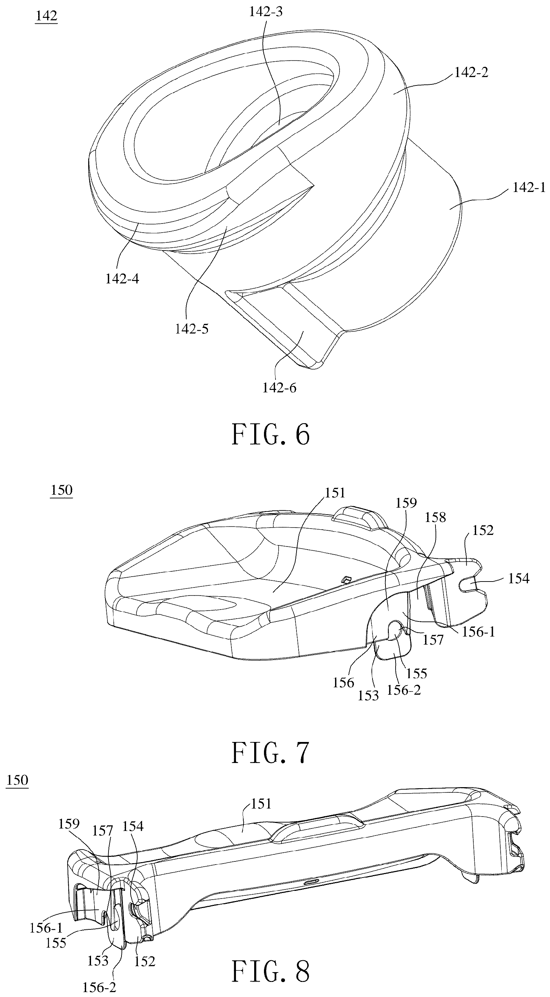

Reference is made to a perspective view of the locking member 142 of FIG. 5 and a perspective view of the positioning member 143 of FIG. 6.

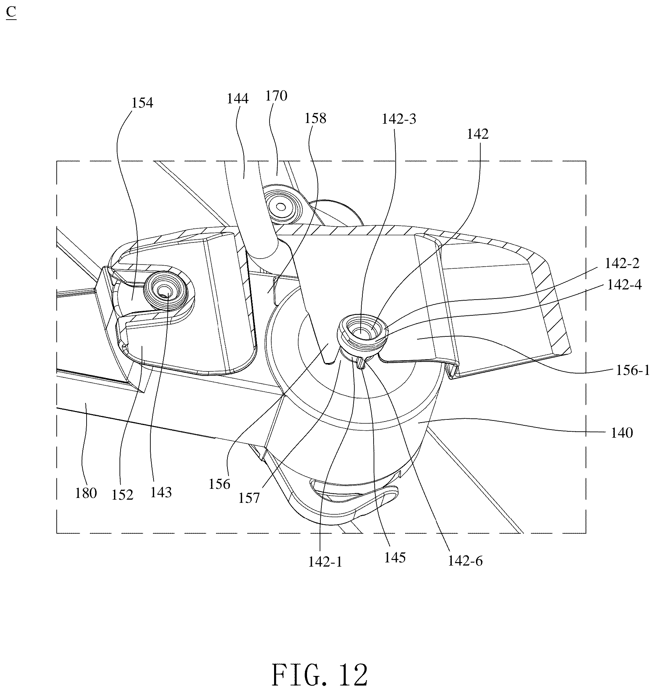

According to this embodiment, the positioning member 143 includes a connecting segment 143-1 fixed to the fixing seat 140 of the frame 100 and a head portion 143-2 adjacent to the connecting segment 143-1, and a diameter of the head portion 143-2 is larger than a diameter of the connecting segment 143-1. When the positioning member 143 is fixed to the fixing seat 140, an annular groove structure is formed between the head portion 143 and the fixing seat 140 to engage a positioning groove 154 of the support plate 150 (see FIG. 12). The connecting segment 143-1 is located at the bottom of the groove structure.

The positioning member 143 further includes a recessed portion 143-3, and the positioning member 143 may be connected to the fixing seat 140, for example, through a connector (not shown) such as a screw provided in the recessed portion 143-3. The positioning member 143 may be made of a hard material such as metal or plastic.

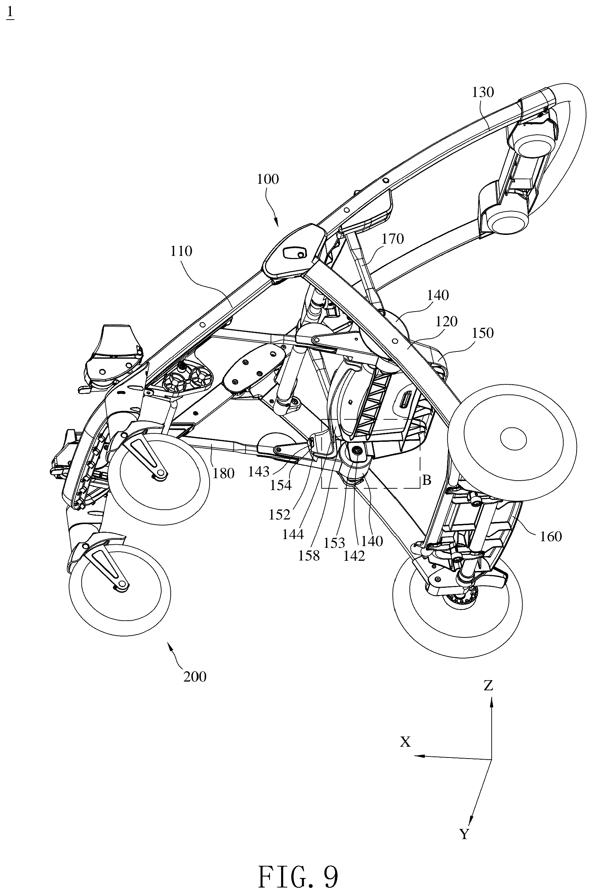

The positioning member 143 is configured to position the support plate 150 and provide a bearing force, and specific situations are shown in FIGS. 9-13.

According to this embodiment, the locking member 142 includes a connecting segment 142-1 fixed to the fixing seat 140 of the frame 100 and a locking portion 142-2 adjacent to the connecting segment 142-1. For example, the connecting segment 142-1 is cylindrical and has a smaller diameter than the locking portion 142-2. Optionally, a positioning projection 142-6 is provided on a periphery of the connecting segment 142-1, and the positioning projection 142-6 may be engaged with the positioning portion 145 provided in the fixing seat 140, thereby avoiding rotation of the locking member 142.

The locking member 142 includes a recessed portion 142-3, and the locking member 142 may be connected to the fixing seat 140, for example, through a connector (not shown) provided in the recessed portion 142-3. The locking member 142 may be made of a hard material such as metal or plastic. An end surface of the locking portion 142-2 on a side away from the fixing seat 140 is an inclined surface, to guide the locking portion 142-2 to be inserted into an engaging hole 155 described later, and a lower end of the inclined surface (i.e., a side away from the carrying portion 151) is provided with an engaging projection 142-4. For example, the engaging projection 142-4 is a tongue piece extending outwards in a radial direction of the locking portion 142-2, and the locking portion 142-2 further includes an engaging groove 142-5 adjacent to the engaging projection 142-4. The locking portion 142-2 is configured to lock the support plate 150.

FIGS. 7 and 8 are perspective views of the support plate 150 according to an embodiment of the present disclosure from different angles of view.

According to the present embodiment, at least two engaging portions 152, 153 are provided on two sides of the support plate 150 along the transverse direction Y, respectively. The at least two engaging portions 152, 153 include a locking member accommodating portion 153 for accommodating the locking member 142 (see FIG. 4) and a positioning member accommodating portion 152 for accommodating the positioning member 143 (see FIG. 4). Optionally, in some embodiments, a distance between the locking member accommodating portion 153 and the positioning member accommodating portion 152 may be greater than or equal to half of a width W of the support plate 150, thereby providing a stable carrying capacity. However, the present disclosure is not limited thereto.

According to this embodiment, the positioning member accommodating portion 152 is provided at a front end side of the support plate 150 and includes the positioning groove 154. Referring to FIG. 8, the positioning member accommodating portion 152 extends from the support plate 150 along the forward direction X. In a double-layer structure of the positioning member accommodating portion 152, the positioning groove 154 is provided on an outer wall (outer layer). According to this embodiment, the positioning groove 154 is an elongated groove extending along the forward direction X, and an opening of the elongated groove faces forwards. In some embodiments, the positioning groove 154 may be a V-shaped groove tapering in width from the opening to the bottom, to facilitate guidance on the insertion of the positioning member 143. An inner wall (inner layer) of the positioning member accommodating portion 152 is substantially flat and is configured to shield the positioning member 143.

According to this embodiment, the locking member accommodating portion 153 is provided on a side wall perpendicular to the carrying portion 151 of the support plate 150. The locking member accommodating portion 153 has a double-layer structure, i.e., including a first side wall 156-1 close to the frame 100 and a second side wall 156-2 away from the frame 100. The second side wall 156-2 is a tongue piece protruding downwards, and the caregiver may swing the second side wall 156-2 in a direction towards the first side wall 156-1 by manually operating a lower end of the second side wall 156-2.

According to this embodiment, the first side wall 156-1 is provided with a guide groove 157 with an opening away from the carrying portion 151 of the support plate 150, and the second side wall 156-2 is provided with the engaging hole 155. Optionally, the guide groove 157 has a maximum width at the opening, and the width gradually decreases from the opening to the bottom, thereby guiding the locking member 142 to be engaged with the locking member accommodating portion 153. Optionally, the engaging hole 155 may be circular or elliptical. The guide groove 157 substantially corresponds to the engaging hole 155 in position in a width direction. Optionally, an inwardly recessed receiving portion 159 of the first side wall 156-1 is configured to be engaged with the fixing seat 140, and the specific arrangement is shown in FIG. 9.

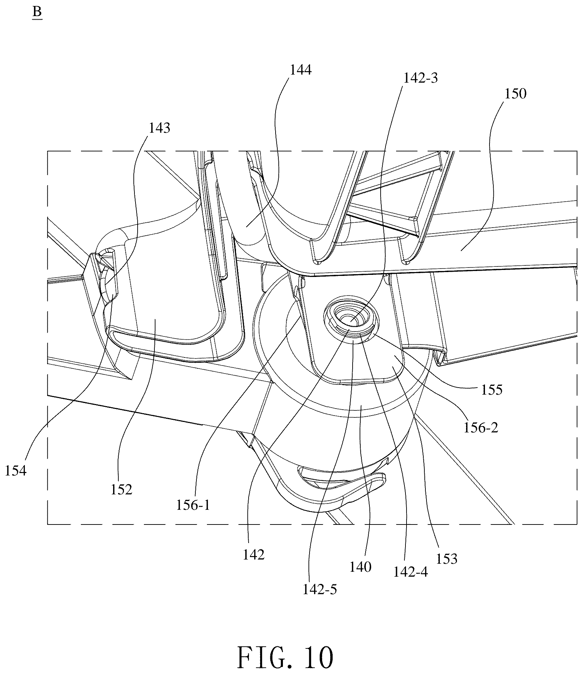

FIG. 9 is a bottom perspective view of the child carrier 1 according to an embodiment of the present disclosure. FIG. 10 is a partially enlarged view of part B of FIG. 9.

In FIGS. 9 and 10, the support plate 150 is engaged with the fixing seat 140. The locking member 142 is engaged with the locking member accommodating portion 153, the positioning member 143 is engaged with the positioning member accommodating portion 152, and the locking member 142 and the positioning member 143 provide additional bearing force for the support plate 150 while fixing the position of the support plate 150. The two fixing seats 140 on the left and right are respectively accommodated in the receiving portions 159 shown in FIGS. 7 and 8 and abut against the carrying portion 151, so as to provide an upward bearing force for the support plate 150. The support plate 150 is pivotable about a connection line between a pair of positioning members 143, to pivot between a use position (see FIG. 1) and a storage position (not shown). Referring to FIG. 1, when the support plate 150 is in the use position, the carrying portion 151 is substantially parallel to the horizontal plane to facilitate the seating of the child; when the support plate 150 is rotated from the use position along a counterclockwise direction to the storage position that is at a certain angle to the horizontal plane, a length of the support plate 150 in the forward direction X may be reduced to avoid interference from the support plate 150 when the child stands on the footrest 160. For example, the storage position may be in a direction that forms an angle of about 90 degrees with the horizontal plane, which is not limited herein.

FIG. 10 shows the positioning member accommodating portion 152 and the locking member accommodating portion 153 in detail. According to this embodiment, the positioning member accommodating portion 152 extends forwards from an end of the carrying portion 151, and the double-layer structure of the positioning member accommodating portion 152 is integrally formed by a side wall of the support plate 150.

The locking member accommodating portion 153 corresponds to the locking member 142, and the locking portion 142-2 is provided with the engaging projection 142-4 on a top end side away from the fixing seat 140 to engage with the locking member accommodating portion 153. When the locking member 142 is engaged with the guide groove 157 of the first side wall 156-1, the caregiver may press the second side wall 156-2 towards the locking portion 142-2, so that the locking portion 142-2 passes through the engaging hole 155, and the engaging projection 142-4 is engaged with an edge of the engaging hole 155 to prevent the second side wall 156-2 from disengaging from the locking portion 142-2. According to an embodiment, the engaging hole 155 is an elliptical or racetrack-shaped long hole, thereby providing space for the locking member 142 to pass through. According to another embodiment, the engaging hole 155 may also be a circular hole.

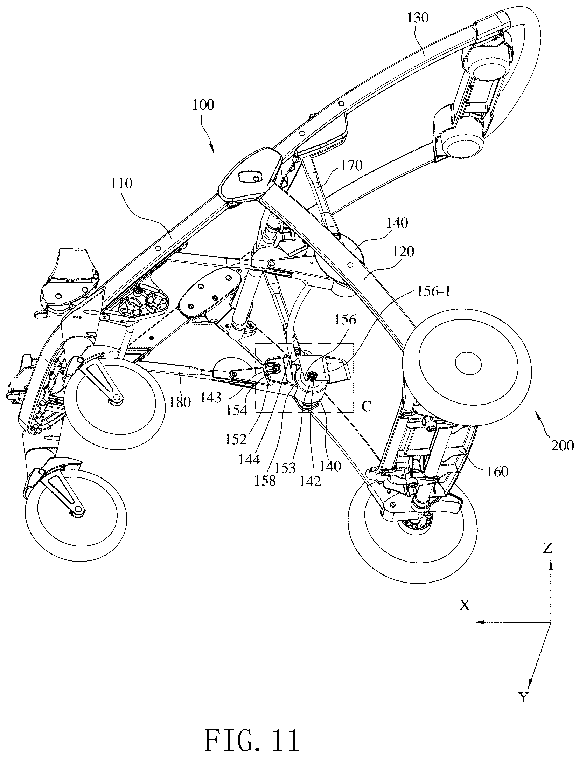

FIG. 11 is a bottom perspective view of the child carrier 1 according to an embodiment of the present disclosure. FIG. 12 is a partially enlarged view of part C of FIG. 11. FIGS. 11 and 12 show a cross section of a portion of the support plate 150 between the double-layer structure of the positioning member accommodating portion 152 and the double-layer structure of the locking member accommodating portion 153, so that outer-layer structures of the locking member 142 and the positioning member 143 accommodated in the locking member accommodating portion 153 and the positioning member accommodating portion 152 can be observed in a direction from the inside to the outside.

According to this embodiment, the connecting segment 143-1 of the positioning member 143 is engaged with a positioning hole 154 of the first side wall 156-1 of the positioning member accommodating portion 152, and the head portion 143-2 is engaged in the positioning member accommodating portion 152 due to its large diameter to prevent the support plate 150 from sliding in the transverse direction Y.

According to this embodiment, in terms of the locking member accommodating portion 153, the first side wall 156-1 and the guide groove 157 can be seen, and the guide groove 157 is in an open shape to guide the connecting segment 142-1 of the locking member 142 to be inserted into and supported on the connecting segment 142-1. The locking member 142 is provided with the positioning projection 142-6 on a lower side of the connecting segment 142-1 and between the connecting segment 142-1 and the locking portion 142-2, to prevent rotation of the locking member 142 relative to the fixing seat 140, and meanwhile provide additional support for the connecting segment 142-1 and the locking portion 142-2.

According to this embodiment, the support rod 144 is inserted to the rear of the second side wall 156-2 through a passage 158 between the locking member accommodating portion 153 and the positioning member accommodating portion 152, thereby providing additional bearing force for the support plate 150.

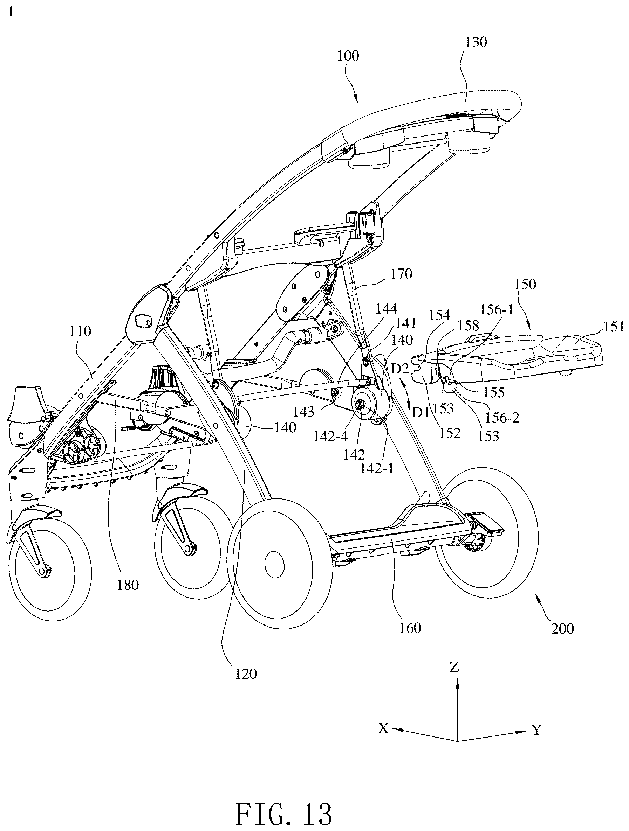

FIG. 13 is a rear perspective view of the child carrier 1 according to an embodiment of the present disclosure, in which the support plate 150 is separated from the frame 100. An assembling and disassembling process of the support plate 150 is described with reference to FIG. 13.

In the assembling process, the support plate 150 is first obliquely displaced downwards to the fixing seat 140, so that the positioning member 143 slides into the positioning groove 154 of the positioning member accommodating portion 152, and after the positioning member 143 continues to slide until it abuts against the bottom of the positioning groove 154, the support plate 150 is pivoted in a clockwise direction D1 with the connection line between the two positioning members 143 as a pivot axis. During the pivoting process, the connecting segment 142-1 of the locking portion 142-2 is inserted into the guide groove 157 of the second side wall 156-2 of the locking member accommodating portion 153. Then, the caregiver presses the lower end of the second side wall 156-2 outwards to deflect the second side wall 156-2 towards the first side wall 156-1, thereby allowing the locking portion 142-2 of the locking member 142 to pass through the engaging hole 155 of the second side wall 156-2.

When the locking portion 142-2 is engaged with the engaging hole 155, the connecting segment 142-1 of the locking member 142 gradually enters the opened guide groove 157 and finally abuts against an upper portion of the guide groove 157, and the engaging projection 142-4 of the locking portion 142-2 is engaged with the positioning hole 154 of the first side wall 156-1, thereby locking the locking portion 142-2 in the locking member accommodating portion 153. When the locking portion 142-2 is engaged with the engaging hole 155, the passage 158 of the support plate 150 abuts against the support rod 144, and the receiving portion 159 abuts against an upper surface of the fixing seat 140, thereby further bearing the support plate 150 upwards.

At this time, the support plate 150 and the frame 100 are engaged in place, and the carrying portion 151 of the support plate 150 is substantially parallel to the ground, allowing the child to be seated.

In the process of disassembling the support plate 150, the caregiver first swings the lower end of the second side wall 156-2 from the outside to the inside and from below the support plate 150, so that the engaging hole 155 is disengaged from the engaging projection 142-4 of the locking member 142. Subsequently, the support plate 150 is pivoted in the counterclockwise direction D2 around the connection line between the positioning members 143, and after the support plate 150 is pivoted to be disengaged from the locking member 142 and the support rod 144, the support plate 150 is pulled in a direction away from the positioning member 143, so that the support plate 150 is disengaged.

The present disclosure provides the support plate 150, such as a seat plate, which can be quickly disassembled and assembled and is extremely convenient to use; and only a single seat plate may form support for the article or the child, which produces a better weight-reduction effect on the frame 100, simplifies the structure, and lowers cost of double-seat baby strollers for customers.

The support plate 150 may be simply engaged through the engaging members 142 and 143, and after the support plate 150 is disengaged from the engaging members 142 and 143, the support plate 150 may be quickly disassembled by rotating the support plate 150. The support plate 150 may be quickly disassembled and assembled, and is extremely convenient to use.

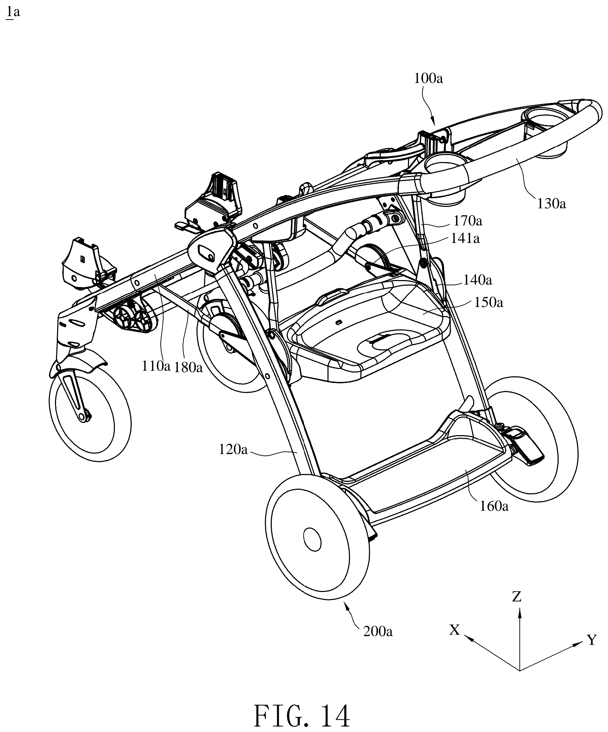

FIGS. 14 to 22 show a child carrier 1a according to another embodiment of the present disclosure. To avoid repetition, the specific structures similar to those in the embodiments of FIGS. 1 to 13 may refer to the previous description.

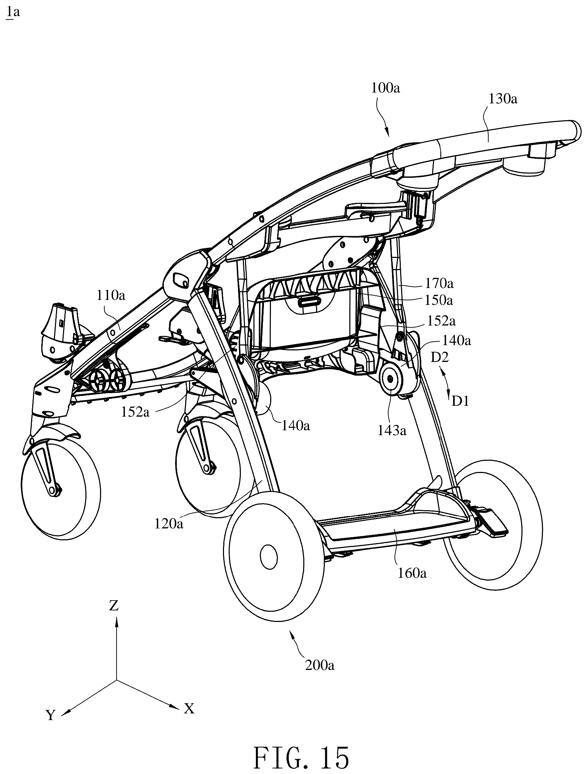

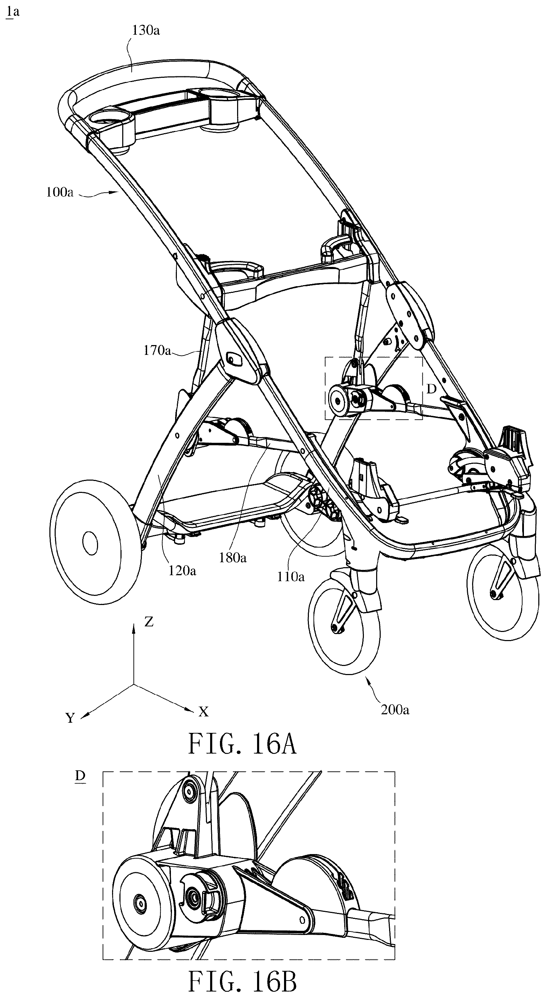

A support plate 150a is in a use position in FIG. 14 and in a storage position in FIG. 15. The support plate 150a has a locking member accommodating portion 153a (see FIG. 13) located in the front along the X direction and a positioning member accommodating portion 152a located in the rear along the X direction. The locking member accommodating portion 153a is configured to accommodate a locking member 142a (see FIG. 16) fixed to a frame 100a or a fixing seat 140a of the frame 100a. The positioning member accommodating portion 152a is configured to accommodate a positioning member 143a, and the positioning member 143a may be fixed as an independent component to or be integrally formed with (as shown in this embodiment) the frame 100a or the fixing seat 140a of the frame 100a.

The support plate 150a may pivot relative to the frame 100a about a connection line between a pair of locking members 142a, so as to pivot between and stay at the use position and the storage position, or may stay at another position other than the use position and the storage position. Referring to FIG. 14, when the support plate 150a is in the use position, the support plate 150a may be substantially parallel to the horizontal plane to facilitate seating of the child. The support plate 150a may be rotated from the use position along the counterclockwise D2 direction to the storage position that is at a certain angle to the horizontal plane, to reduce a length of the support plate 150a in the forward direction X, so as to prevent the child from being interfered by the support plate 150a when standing on a footrest 160a. For example, the storage position may be in a direction that forms an angle of about 90 degrees with the horizontal plane, which is not limited herein.

A specific form of the support plate 150a and its engagement with the frame 100a will be described below with reference to FIG. 16 to FIG. 22.

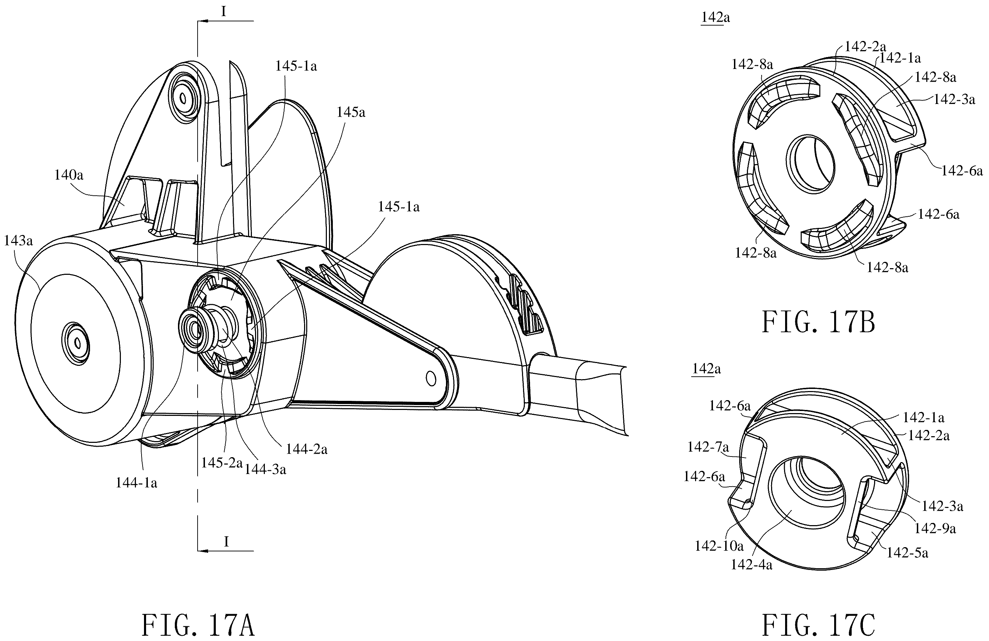

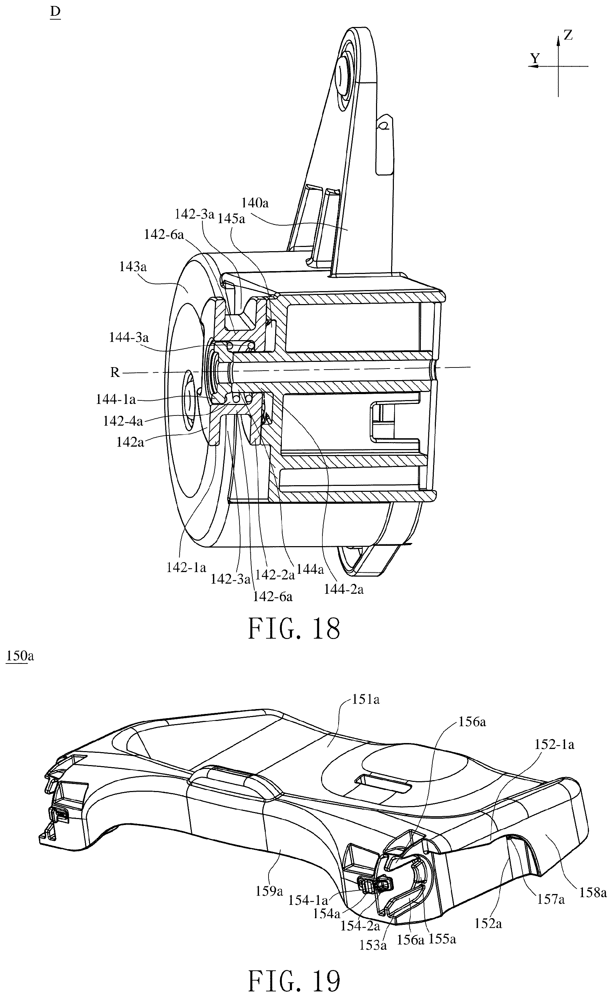

FIG. 16A is a front perspective view of the child carrier 1a, in which the support plate 150a is removed; FIG. 17A is an enlarged view of part D of FIG. 16, in which a rotating seat 142a is removed; FIG. 17B and FIG. 17C are two side views of the rotating seat 142a; and FIG. 18 is a sectional view taken along sectional line I-I of FIG. 17A. Since the two fixing seats 140a located on left and right sides of the frame 100a are mirror-symmetric with each other, the fixing seat 140a on the right side will be taken as an example for explanation below.

The fixing seat 140a of the frame 100a includes the locking member 142a, and the locking member 142a is configured as the rotating seat 142a that is rotatable relative to the fixing seat 140a. The rotating seat 142a has a first wall portion 142-1a and a second wall portion 142-2a parallel to each other along a rotation axis R of the rotating seat 142a. Two partition plates 142-6a are provided between the first wall portion 142-1a and the second wall portion 142-2a, and the first wall portion 142-1a and the second wall portion 142-2a are respectively connected to two ends of each partition plate 142-6a. The first wall portion 142-1a and the second wall portion 142-2a along with the partition plates 142-6a form two recessed portions 142-3a for engaging the support plate 150a. The two recessed portions 142-3a are distributed in a circumferential direction of the rotating seat 142a and opposite to each other in a radial direction of the rotating seat 142a. The recessed portion 142-3a is configured to accommodate an engaging block 156a of the locking member accommodating portion 153a, and the locking member accommodating portion 153a is located at an end of a side wall 158a of the support plate 150a adjacent to a rear wall 159a (see FIG. 19). For example, the first wall portion 142-1a and the second wall portion 142-2a may be circular sheets, and the recessed portions 142-3a may be fan-shaped grooves.

A cylindrical coupling portion 144a is provided on and protrudes from a side surface of the fixing seat 140a, and the rotating seat 142a is pivotably connected to the fixing seat 140a by using the coupling portion 144a. The coupling portion 144a includes a head portion 144-1a and a connecting rod 144-2a; the connecting rod 144-2a extends from the fixing seat 140a and partially extends into an accommodating portion 142-4a of the rotating seat 142a; the head portion 144-1a is connected to the connecting rod 144-2a and is located in the accommodating portion 142-4a; and a diameter of the head portion 144-1a is substantially identical to a diameter of the accommodating portion 142-4a and is larger than a diameter of the connecting rod 144-2a, so that the rotating seat 142a is slidable on the head portion 144-1a along the rotation direction R.

Referring to FIG. 17A, the fixing seat 140a further has a positioning portion 145a, and the positioning portion 145a defines a rotation angle of the rotating seat 142a. According to this embodiment, the positioning portion 145a includes a plurality of continuous positioning projections 145-1a along its circumferential direction with the connecting rod 144-2a as the center; each positioning projection 145-1a is in the form of a protrusion with inclined surfaces on both sides; and a concave positioning recess 145-2a is formed between opposite inclined surfaces of every two positioning projections 145-1a. Referring to FIG. 17B, an outer side surface of the second wall portion 142-2a of the rotating seat 142a includes at least one protruding portion 142-8a (e.g., four protruding portions 142-8a), and the protruding portion 142-8a is shaped to be embedded in the positioning recess 145-2a. When the protruding portion 142-8a is embedded in one of a plurality of sets of positioning recesses 145-2a, a rotational motion of the rotating seat 142a may be limited.

The coupling portion 144a further includes an elastic member 144-3a. The elastic member 144-3a is provided between the rotating seat 142a and the head portion 144-1a and is at least fixed to the head portion 144-1a. According to this embodiment, the elastic member 144-3a is fitted over the connecting rod 144-2a and located in the accommodating portion 142-4a; a first end of the elastic member 144-3a is fixedly connected to the head portion 144-1a, and a second end of the elastic member 144-3a is connected to or abuts against the rotating seat 142a, so that the elastic member 144-3a always exerts, on the rotating seat 142a, a pressing force towards the positioning portion 145a. For example, the elastic member 144-3a may be a compression spring or an elastic sheet.

According to this embodiment, in the use position (see FIG. 1), the protruding portion 142-8a of the rotating seat 142a is embedded in the positioning recess 145-2a in FIG. 17A, so that the support plate 150a keeps parallel to the horizontal plane. In a process in which the caregiver switches the support plate 150a, for example, from the use position to the storage position (see FIG. 2), the caregiver pivots the support plate 150a upwards, so that the protruding portion 142-8a slides along an inclined surface on a side of the positioning projection 145-1a and presses the elastic member 144-3a along a direction of the rotation axis R, thereby allowing the rotating seat 142a to start to rotate around the rotation axis R. In this process, the rotating seat 142a moves leftwards along the rotation axis R in FIG. 18 to be disengaged from the fixing seat 140a. When the support plate 150a, for example, pivots 90 degrees to reach the storage position, under the action of the elastic member 144-3a, the protruding portion 142-8a of the rotating seat 142a falls into and embedded in the corresponding positioning recess 145-2a again. Thus, the support plate 150a may be locked at a plurality of positions.

Optionally, the fixing seat 140a further includes the positioning member 143a located behind the locking member 142a along the forward direction X, and the positioning member 143a is configured to prevent the support plate 150a in the use position from moving along the forward direction X, so as to prevent the support plate 150a from falling off the frame 100a due to accidental unlocking of the support plate 150a. The positioning member 143a may be formed by a raised portion of a housing of the fixing seat 140a, for example, configured as a cylinder. The positioning member 143a is engaged with the positioning member accommodating portion 152a (see FIG. 19), to position the support plate 150a in the use position parallel to the horizontal plane. The positioning member accommodating portion 152a is formed by the side wall 158a of the support plate 150a. According to this embodiment, an upper side surface of the positioning member accommodating portion 152a for abutting against the positioning member 143a is configured as an anti-disengagement portion 157a having an arc-shaped groove, and the anti-disengagement portion 157a is shaped to fit the cylindrical positioning member 143a. The arc-shaped anti-disengagement portion 157a forms a protrusion 157-1a, so that when the positioning member 143a is engaged with the positioning member accommodating portion 152a, that is, when the support plate 150a is in the use position parallel to the horizontal plane and the locking member 142a is not locked to the locking member accommodating portion 153a, the positioning member accommodating portion 152a cannot easily disengage directly rearwards from the positioning member 143a along the forward direction X. According to this embodiment, only after the support plate 150a is lifted upwards by at least a certain distance from the use position, the support plate 150a may be disengaged from the frame 100a without being hindered by the anti-disengagement portion 157a, thereby preventing the support plate 150a in the use position from being directly disengaged from the frame 100a.

According to FIGS. 19, the locking member accommodating portion 153a is provided at one end of the side wall 158a of the support plate 150a adjacent to the rear wall 159a. The locking member accommodating portion 153a is formed by the side wall 158a. For example, an upper portion and a lower portion of the locking member accommodating portion 153a are respectively provided with elongated engaging blocks 156a opposite to each other along the forward direction X, and the engaging blocks 156a may be respectively inserted into the recessed portions 142-3a and abut against the partition plates 142-6a (see FIG. 17), so that the support plate 150a may drive the rotating seat 142a to pivot synchronously. An end of the lower engaging block 156a that faces the rear wall 159a is formed as an inclined surface that is gradually enlarged, and when the engaging block 156a is inserted into the rotating seat 142a, the inclined surface first abuts against an inclined end of the partition plate 142-6a, thereby playing a guiding role and reducing insertion resistance.

Between the engaging blocks 156a, a convex portion 155a is provided at an end of the locking member accommodating portion 153a away from the rear wall 159a, and the convex portion 155a is spaced apart from the engaging block 156a by a distance corresponding to a thickness of the partition plate 142-6a. The convex portion 155a may be inserted into the receiving groove 142-7a of the rotating seat 142a (see FIGS. 17B and 17C). The receiving groove 142-7a is surrounded by the partition plate 142-6a and the second wall portion 142-2a, and has an opening at the first wall portion 142-1a. When the support plate 150a is locked onto the rotating seat 142a, the convex portion 155a and a locking portion 154-5a described later clamp the rotating seat 142a from front and rear sides to improve the stability of engagement between the rotating seat 142a and the support plate 150a.

The rear wall 159a of the support plate 150a is provided with a locking assembly 154a, the locking assembly 154a includes a snap block 154-1a and a sliding groove 154-2a extending perpendicular to the side wall 158a, and the engaging block 154-1a may slide in the sliding groove 154-2a.

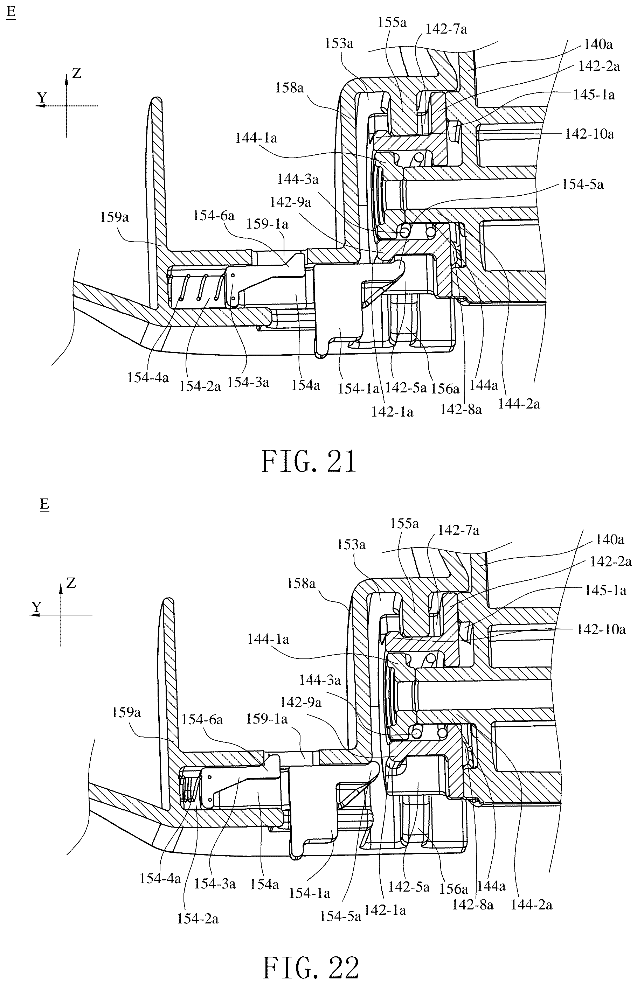

An engaging groove 142-5a fitted with the snap block 154-1a is provided in the rotating seat 142a. The engaging groove 142-5a is surrounded by the partition plate 142-6a and the second wall portion 142-2a, and has an opening at the first wall portion 142-1a to receive the snap block 154-1a. The engaging groove 142-5a has a flange 142-9a at the first wall portion 142-1a, and a locking portion 154-5a of the snap block 154-1a (see FIGS. 21-22) may be engaged with and locked onto the flange 142-9a. Optionally, the shape of the engaging groove 142-5a is axisymmetric with the receiving groove 142-7a relative to the rotation axis R. Optionally, the engaging groove 142-5a and the receiving groove 142-7a are both located on an inner side of the frame 100a. That is, the engaging groove 142-5a and the receiving groove 142-7a of the fixing seat 140a located on the left side of the frame 100a and the engaging groove 142-5a and the receiving groove 142-7a of the fixing seat 140 located on the right side of the frame 100a face each other.

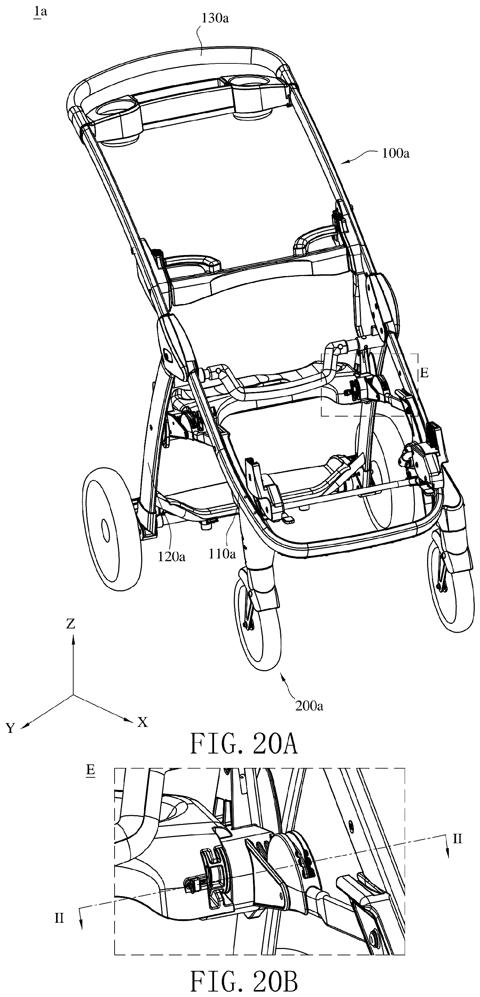

The locking and releasing of the rotating seat 142a by the snap block 154-1a along the sliding groove 154-2a will be described below in detail with reference to FIGS. 20A, 20B, 21 and 22. FIGS. 21-22 are sectional views along sectional line II- II of FIG. 20B, in which the snap block 154-1a is in a locked state and a released state, respectively.

FIG. 21 shows the locked state, in which the snap block 154-1a extends rightwards from the sliding groove 154-2a into the engaging groove 142-5a and is engaged with the flange 142-9a, and the flange 142-9a may prevent the snap block 154-1a from retracting into the sliding groove 154-2a. The snap block 154-1a is configured as a quick release push button and has a handheld portion 154-7a. The snap block 154-1a further has a limiting block 154-3a that is disposed at an end of the snap block 154-1a away from the rotating seat and that is slidable in the sliding groove 154-2a. The limiting block 154-3a has a limiting portion 154-6a, and the limiting portion 154-6a extends into a notch 159-1a formed in the rear wall 159a and is blocked by the notch 159-1a to limit a distance that the snap block 154-1a extends out of the sliding groove 154-2a.

The locking assembly 154 a further has an elastic member 154-4a in the form of a push spring, and the elastic member 154-4a is accommodated in the sliding groove 154-2a. A first end of the elastic member 154-4a is connected to the bottom of the sliding groove 154-2a, and a second end of the elastic member 154-4a abuts against the limiting block 154-3a. The elastic member 154-4a enables the limiting block 154-3a to always abut against a right end side of the notch 159-1a without external force, thereby automatically maintaining the snap block 154-1a in the locked state.

FIG. 22 shows the release state, in which the caregiver holds the handheld portion 154-7a and pushes the snap block 154-1a leftwards, and the snap block 154-1a overcomes the blocking of the flange 142-9a to the left from the sliding groove 154-2a and does not overlap with the rotating seat 142 at all, so that the rotating seat 142a can be released. In this state, the caregiver may disengage the support plate 150a from the rotating seat 142a and remove the support plate 150a from the frame 100a.

It can also be seen from FIGS. 21 and 22 that the convex portion 155a and the engaging block 156a have substantially the same width, which is smaller than a width of the receiving groove 142-7a and a width of the recessed portion 142-3a, thereby forming a movement space. Therefore, when the rotating seat 142a rotates and the second wall portion 142-2a is disengaged from the fixing seat 140a, the second wall portion 142-2a may move leftwards by a certain distance. Correspondingly, there may also be a movement space between the first wall portion 142-1a and the side wall 158a.

According to this embodiment, a transition portion between the receiving groove 142-7a and the first wall portion 142-1a is configured as a rounded portion 142-10a. When the locking member accommodating portion 153a of the support plate 150a is inserted into the locking member 142a, that is, when the support plate 150a is inserted into the locking member 142a downwards from above the figure plane of FIG. 21, since the locking portion 154-5a is always in an extended position shown in FIG. 21 without external force, the locking portion 154-5a will first abut against the rounded portion 142-10a of the receiving groove 142-7a of the rotating seat 142a. The rounded portion 142-10a guides the locking portion 154-5a to retract into the sliding groove 154-2a against an elastic force of the elastic member 154-4a, thereby reducing frictional resistance between the components and facilitating insertion.

According to the present disclosure, contact surfaces that occur between components during operation may be each configured as rounded portions to achieve relative movement with low resistance.

According to this embodiment, when the caregiver operates by rotating the support plate 150a, no unlocking action is required, and only the support plate 150a or the seating plate needs to be directly pushed upwards, which is very convenient to operate; the support plate 150a may be positioned at a plurality of rotation positions to meet usage and storage requirements; the structure of the support plate 150a is simple and convenient to be disassembled and assembled, and the support plate 150a may be removed from the frame only after the support plate 150a is disengaged from the use position, which can prevent accidental operation.

Since the present disclosure may be implemented in various forms without departing from the spirit and essence of the present disclosure, it should be understood that the above embodiments are not limited to any of the foregoing details, but should be interpreted in the broadest manner within the scope defined by the claims, and all changes falling into the scope of the claims or their equivalents shall be encompassed by the claims.

## Claims

1. A child carrier (1; 1a), comprising:
a frame (100; 100a) comprising at least two engaging members (142, 143; 142a, 143a); and
a support plate (150; 150a) comprising at least two engaging portions (152, 153; 15a, 153a), the engaging members (142, 143; 142a, 143a) being respectively engagable with the engaging portions (152, 153; 15a, 153a) to allow the support plate (150; 150a) to be detachably engaged with the frame (100; 100a),
wherein the at least two engaging members (142, 143; 142a, 143a) comprise a locking member (142; 142a) and a positioning member (143; 143a), and the at least two engaging portions (152, 153; 152a, 153a) comprise a locking member accommodating portion (153) and a positioning member accommodating portion (152; 152a);
the positioning member (143; 143a) is pivotably engaged with the positioning member accommodating portion (152; 152a) to allow the support plate (150; 150a) to be pivotable between a use position and a storage position relative to the frame (100; 100a);
when the support plate (150; 150a) is in the use position, the locking member (142; 142a) is engaged with the locking member accommodating portion (153; 153a) to prevent the positioning member (143; 143a) from being disengaged from the positioning member accommodating portion (152; 152a);
when the support plate (150; 150a) is in the storage position, the locking member (142; 142a) is disengaged from the locking member accommodating portion (153; 153a) to allow the positioning member (143; 143a) to be disengaged from the positioning member accommodating portion (152; 152a).

2. The child carrier (1) according to claim 1, wherein:
the positioning member accommodating portion (152) has a positioning groove (154) for engagement with the positioning member (143); the locking member accommodating portion (153) has a guide groove (157) for engagement with the locking member (142); an opening direction of the positioning groove (154) is different from an opening direction of the guide groove (157);
the locking member accommodating portion (153) further has a locking assembly for locking the locking member.

3. The child carrier (1) according to claim 2, wherein:
the positioning member accommodating portion (152) is disposed perpendicular to a carrying portion (151) of the support plate (150), the opening direction of the positioning groove (154) is parallel to the carrying portion (151), the locking member accommodating portion (153) is disposed perpendicular to the carrying portion (151) of the support plate (150), and the opening direction of the guide groove (157) is away from the carrying portion (151).

4. The child carrier (1) according to any one of claims 2 or 3, wherein:
the locking member (142) has an engaging projection (142-4);
the locking member accommodating portion (153) comprises a first side wall and a second side wall spaced apart from each other, the guide groove (157) is disposed at the first side wall, and the second side wall is provided with an engaging hole (155), wherein the locking assembly is the engaging hole (155);
when the locking member (142) is inserted into the guide groove, the second side wall is operatively bendable towards the first side wall, to allow the engaging hole to lock the engaging projection (142-4).

5. The child carrier (1) according to any one of claims 1 to 4, wherein:
the positioning member accommodating portion (152) has a double-layer structure, and the positioning groove (154) is provided in a layer close to the frame (100);
the positioning member (143) comprises a connecting segment (143-1) fixed to the frame (100) and a head portion (143-2) adjacent to the connecting segment (143-1), a diameter of the head portion (143-2) is greater than a diameter of the connecting segment (143-1), and the head portion (143-2) is capable of passing through the positioning groove (154) to be positioned between two layers of the double-layer structure.

6. The child carrier (1) according to any one of claims 4 or 5, wherein:
the locking member (142) comprises a connecting segment (142-1) fixed to the frame (100) and a locking portion (142-2) adjacent to the connecting segment (142-1), and the engaging projection (142-4) is protrudingly disposed at a top end side of the locking portion (142-2) away from the frame (100);
when the locking portion (142-2) passes through the engaging hole (155), the engaging projection (142-4) blocks the second side wall (156-2) from being disengaged from the locking portion (142-2).

7. The child carrier (1) according to claim 6, wherein:
the engaging projection (142-4) protrudes from the locking portion (142-2) towards the ground along a vertical direction (Z) of the frame (100), and the locking portion (142-2) comprises an engaging groove (142-5) adjacent to the engaging projection (142-4) to receive the second side wall (156-2).

8. The child carrier (1) according to any one of claims 3 to 7, wherein:
the positioning member accommodating portion (152), the locking member accommodating portion (153) and the carrying portion form an integral member; and an end surface of a top end side of the locking portion (142-2) is an inclined surface.

9. The child carrier (1) according to any one of claims 1 to 8, wherein:
the frame (100) further comprises a support rod (144), wherein the support rod (144) is located between the at least two engaging members (142, 143) and supports the support plate (150) to provide a bearing force for the support plate (150) when the support plate (150) is engaged with the frame (100); and/or
the child carrier (1) further comprises a pair of fixing seats (140), wherein the fixing seats (140) are each protrudingly disposed at the frame (100), the locking member (142) and the positioning member (143) are disposed on each of the fixing seats (140) and spaced apart from each other, an end of the support plate has a receiving portion (159) recessed inwardly, and the receiving portion (159) abuts against an upper surface of the fixing seat (140) to provide a bearing force for the support plate (150) when the support plate (150) is engaged with the frame (100).

10. The child carrier (1a) according to any one of claims 1 to 9, wherein the locking member (142) is configured as a rotating seat (142a), the rotating seat (142a) is pivotably connected to the frame (100a) by a coupling portion (144a), and the support plate (150a) pivots relative to the frame (100a) through the rotating seat (142a); the frame (100a) has a positioning portion (145a), and the positioning portion (145a) defines a rotation angle of the rotating seat (142a) to define a pivot position of the support plate (150a) relative to the frame (100a).

11. The child carrier (1a) according to claim 10, wherein the positioning portion (145a) comprises a plurality of positioning projections (145-1a), a plurality of positioning recesses (145-2a) are formed between the plurality of positioning projections (145-1a), the rotating seat (142a) comprises at least one protruding portion (142-8a), and the protruding portion (142-8a) is embedded in one of the plurality of positioning recesses (145-2a) to limit the rotating seat (142a) to one of a plurality of rotation positions.

12. The child carrier (1a) according to any one of claims 10 or 11, wherein the coupling portion (144a) comprises a head portion (144-1a) and a connecting rod (144-2a); a first end of the connecting rod (144-2a) is connected to a fixing seat (140a) of the frame (100a), while a second end of the connecting rod (144-2a) is connected to the head portion (144-1a); the coupling portion (144a) further comprises an elastic member (144-3a) disposed between the rotating seat (142a) and the head portion (144-1a), and the elastic member (144-3a) exerts, on the rotating seat (142a), a pressing force towards the positioning portion (145a).

13. The child carrier (1a) according to any one of claims 10 to 12, wherein the support plate (150a) further comprises a locking member accommodating portion (153a) for receiving the rotating seat (142a), and the locking member accommodating portion (153a) has two engaging blocks (156a) parallel to each other;
the rotating seat (142a) has a first wall portion (142-1a) and a second wall portion (142-2a) parallel to each other along a rotation axis of the rotating seat (142a), two partition plates (142-6a) are provided between the first wall portion (142-1a) and the second wall portion (142-2a), the first wall portion (142-1a) and the second wall portion (142-2a) along with the partition plates (142-6a) form two recessed portions (142-3a), and the two recessed portions (142-3a) are distributed along a circumferential direction of the rotating seat (142a) and opposite to each other along a radial direction of the rotating seat (142a);
when the support plate (150a) is engaged with the frame (100a), the two engaging blocks (156a) are respectively inserted into the two recessed portions (142-3a) and engaged with the partition plates (142-6a), to allow the support plate (150a) to drive rotation of the rotating seat (142a).

14. The child carrier (1a) according to claim 13, wherein along the circumferential direction of the rotating seat (142a), an engaging groove (142-5a) and a receiving groove (142-7a) opposite to each other are provided between the two partition plates (142-6a); a locking assembly (154a) provided on the support plate (150a) is engaged with the engaging groove (142-5a); the receiving groove (142-7a) is configured to receive a convex portion (155a) of the locking member accommodating portion (153a); and the convex portion (155a) is configured to position an insertion location of the rotating seat (142a) with the support plate (150a) and strengthen engagement between the rotating seat (142a) and the support plate (150a);
optionally, wherein the engaging groove (142-5a) is opened towards the support plate (150a), and a flange (142-9a) is provided at a side of the engaging groove (142-5a) facing the locking assembly (154a) to prevent the locking assembly (154a) from being disengaged from the rotating seat (142a);
optionally, wherein a transition portion between the receiving groove (142-7a) and the first wall portion (142-1a) is configured as a rounded portion (142-10a).

15. The child carrier (1a) according to any one of claims 1 to 14, wherein the positioning member accommodating portion (152a) has an anti-disengagement portion (157a), and the anti-disengagement portion (157a) prevents the positioning member (143a) from disengaging from the positioning member accommodating portion (152a) when the support plate (150a) is in the use position.
